# EUROPÄISCHE PATENTSCHRIFT

(11) **EP 1 886 924 B1**
(45) Veröffentlichungstag und Bekanntmachung des Hinweises auf die Patenterteilung: **17.07.2013**
(21) Anmeldenummer: 07015130.3
(22) Anmeldetag: 01.08.2007
(51) Int. Cl.: B65B 65/00, B65B 9/04, B65G 21/02

(54) **Verpackungsmaschine**
Packaging machine
Machine d'emballage

(30) Priorität: 08.08.2006 DE 102006037295
(43) Veröffentlichungstag der Anmeldung: 13.02.2008
(73) Patentinhaber: Multivac Sepp Haggenmüller GmbH & Co. KG, 87787 Wolfertschwenden (DE)
(72) Erfinder: Ehrmann, Elmar, 87730 Bad Grönenbach (DE)
(74) Vertreter: Grünecker, Kinkeldey, Stockmair & Schwanhäusser

(56) Entgegenhaltungen:
- WO-A2-2004/085112
- GB-A- 956 470
- US-A- 4 013 167
- US-A- 4 399 908

## Beschreibung

Die Erfindung betrifft eine Verpackungsmaschine nach dem Oberbegriff des Anspruchs 1.

Eine derartige Verpackungsmaschine ist beispielsweise in der EP 0 569 935 B1 beschrieben. Das dort zur Bildung des Rahmens beschriebene Profil ist mit einem im Wesentlichen U-förmigen Querschnitt ausgebildet, der nach unten hin offen ist. Zur Außenseite der Verpackungsmaschine hin ist dieses Profil geschlossen, d.h. nicht einsehbar. In regelmäßigen Abständen sind von der Unterseite her in einem Abstand zueinander Verbindungselemente fest mit den Enden des U-Profils verbunden.

Verpackungsmaschinen der genannten Art müssen immer höheren Anforderungen an die Hygiene genügen.

Das Rahmenprofil der Verpackungsmaschine nach dem Stand der Technik ist für eine Reinigung nur schwierig von unten her zugänglich. Eine Sichtkontrolle des Reinigungsergebnisses ist ebenfalls nicht oder nur äußerst schwierig durchführbar.

Aufgabe der Erfindung ist es daher, eine Verpackungsmaschine vorzuschlagen, die den zunehmenden Hygieneanforderungen besser genügt.

Diese Aufgabe wird ausgehend von einer Verpackungsmaschine nach dem Oberbegriff des Anspruchs 1 durch dessen kennzeichnende Merkmale gelöst.

Dementsprechend zeichnet sich eine erfindungsgemäße Verpackungsmaschine dadurch aus, dass das Profil des Rahmens seitlich im Wesentlichen offen und nur partiell geschlossen ist.

Das erfindungsgemäße Profil ist somit nicht mehr ein nach unten offenes U-Profil sondern es ist von der Seite her offen und zugänglich. Ein solches Profil kann zumindest bereichsweise als C-Profil ausgeführt sein.

Durch die seitlich offene Gestaltung des Profils ist dieses für eine Reinigung besser zugänglich und insbesondere zu Zwecken einer Sichtkontrolle gut einsehbar.

Vorzugsweise wird das Profil partiell mit Versteifungslaschen geschlossen, wodurch die Steifigkeit des Profils und somit dessen mechanische Belastbarkeit verbessert wird.

In einer besonderen Ausführungsform der Erfindung ist das Profil an der Außenseite des Rahmens offen. Auf diese Weise ist das Innere des Profils von außen her leicht zu reinigen und gut einsehbar. Darüber hinaus bildet das Profil auf der der Transporteinheit für die Verpackungsfolie zugewandeten Innenseite, auf der sich im Betrieb die zu verpackenden Produkte befinden, eine glatte und damit ebenfalls hygienefreundliche Innenwand.

Vorzugsweise ist die Höhe des Profils größer als die Breite. Zum einen ist eine solche Ausgestaltung deutlich steifer und kann somit größere Lasten aufnehmen. Zum anderen ist ein solches Profil in Kombination mit der seitlich offenen Zugänglichkeit besonders hygienefreundlich, da sich die seitliche Öffnung des Profils über eine größere Höhe erstreckt und somit die Zugänglichkeit so wie die Einsehbarkeit weiter verbessert ist.

Vorteilhafterweise wird zusätzlich ein in Längsrichtung verlaufender Längssteg vorgesehen. Ein solcher Längssteg kann das erfindungsgemäße Profil zusätzlich versteifen und darüber hinaus noch weitere Funktionen wie nach folgend beschrieben erfüllen.

In einer besonderen Ausführungsform wird das Profil mit Längssteg einstückig geformt. Die Fertigung kann beispielsweise aus einem Metallblech, z.B. einem Edelstahlblech, aber auch einem Aluminiumblech oder dergleichen vorgenommen werden. Eine derartige Fertigung ist beispielsweise mit einer sogenannten Profilieranlage möglich, die ein solches einstückiges Profil kontinuierlich fertigen kann.

Vorzugsweise wird der Längssteg an der Unterseite des Profils geformt. Hierdurch befinden sich an der Oberseite des Profils keine störenden Kanten. Die Oberseite des Profils kann durch einen Horizontalschenkel des Profils ebenso flächig abgeschlossen sein, wie die Innenseite durch einen sich an dem oberen Horizontalschenkel anschließenden Vertikalschenkel.

In einer bevorzugten Ausführungsform wird der Längssteg mit Ausnehmungen versehen, wodurch das Gewicht des Profils ohne wesentliche Beeinträchtigung der Versteifungsfunktion reduzierbar ist.

In einer besonders vorteilhaften Ausführungsform der Erfindung werden die Versteifungslaschen dadurch gefertigt, dass sie aus dem Profil herausgetrennt werden, so dass für die Herstellung der Versteifungslaschen kein zusätzliches Material bereitgestellt werden muss.

Besonders vorteilhaft ist die Herstellung der Versteifungslaschen, wenn diese an einer Seite nicht abgetrennt, sondern lediglich von dem Profil abgebogen und am gegenüberliegenden freien Ende wieder am Profil befestigt werden. Hierdurch ist das Profil im Bereich dieser Versteifungslaschen mit äußerst geringen Material- und Fertigungsaufwand deutlich versteift.

In einer besonderen Ausführungsform der Erfindung wird das Profil an der Oberseite durchgehend mit einer Abkantung oder Abbiegung versehen, so dass sich ein durchgehender oberer Horizontalschenkel bildet. In Verbindung mit Versteifungslaschen wie oben angeführt, die am oberen Horizontalschenkel des Profils in ihrer Endposition befestigt werden können, ergibt sich im Bereich der Versteifungslaschen eine Kastenprofilform, wodurch sich die Steifigkeit deutlich erhöht.

Die Befestigung der Versteifungslaschen am freien Ende wird vorteilhafterweise durch eine Verschweißung hergestellt, für das sich eine gute Stabilität und Hitzebeständigkeit der Verbindung ergibt. Dadurch ist das Profil auch mit heißen Medien wie Heißdampf gut zu reinigen und zu entkeimen, wobei in einer bevorzugten Ausführungsform die Verbindungslaschen an ihrem freien Ende durchgeschweißt werden, so dass im Bereich dieser geschlossenen Schweißnaht kein Spalt mehr frei ist, in dem sich gegebenenfalls Schmutz oder Keime ablagern könnten.

Insbesondere bei Verwendung von Edelstahl wird das freie Ende der Verbindungslaschen vorzugsweise lasergeschweißt. Mit diesem Verfahren ergibt sich eine vollständig auch in die Tiefe durchgeschweißte Schweißnaht mit den oben angeführten Vorteilen.

Auch andere Schweißverfahren, beispielsweise Schutzgasschweißen oder dergleichen können jedoch zur Herstellung eines derartigen Profils verwendet werden. Beim Schutzgasschweißen wird beispielsweise ein stärkeres Anlaufen vermieden, was ebenfalls von Vorteil ist.

Wird der Längssteg bei der Formung des Profils höher ausgebildet als ein vertikaler Profilschenkel, so kann eine aus dem Längsschenkel geschnittene Lasche eine Höhe im Profil überbrücken, die gleich oder größer als der Vertikalsteg ist. Gegebenenfalls kann dabei auch ausreichend Material zur Formung von Strukturen in den Versteifungslaschen bereitgestellt werden. Auf jeden Fall kann aus einem Längssteg mit der genannten Höhe eine ausreichend lange Versteifungslasche abgetrennt beispielsweise geschnitten oder gestanzt werden, um anschließend durch Biegen die gewünschte Verbindungsstelle im Profil zu erreichen.

An einem erfindungsgemäßen Rahmenprofil werden vorzugsweise im Rastermaß Befestigungsmöglichkeiten für weitere Maschinenteile vorgesehen. Derartige Befestigungsmöglichkeiten können beispielsweise durch Löcher gebildet werden, die im Rastermaß im Vertikalschenkel und/oder im Längssteg angebracht werden, so dass entsprechende Maschinenteile mittels einer Verschraubung auf einfache Weise befestigbar sind. Auch in den Versteifungslaschen können im übrigen Befestigungsmöglichkeiten, beispielsweise wiederum in Form von Bohrungen vorgesehen werden. Hierdurch können Maschinenteile, die an der Innenseite des Profils befestigt werden zusätzlich auch an der Verbindungslasche abgestützt werden.

Um zwei erfindungsgemäße Profile stirnseitig miteinander verbinden zu können werden vorteilhafterweise stirnseitige Verbindungselemente vorgesehen. Derartige Verbindungselemente können beispielsweise sich quer zum Profil erstreckende Schraubplatten in der Stirnseite sein, die an der gewünschten Position mit dem Rahmenprofil verbunden, beispielsweise verschweißt werden. Auch hier empfiehlt es sich wieder, die Schweißverbindung durchzuschweißen, um die genannte Hygienefreundlichkeit zu gewährleisten.

In einer vorteilhaften Ausführungsform der Erfindung wird weiterhin wenigstens ein Einlegeteil als Verbindungselement zwischen den miteinander zu verbindenden Profilen vorgesehen. Ein solches Verbindungsstück kann nicht nur der Verbindung der Profile, sondern zugleich als Distanzstück dienen, um einen definierten Spalt zwischen den zu verbindenden Profilen offen zu lassen. Dieser Spalt kann dabei ausreichend groß bemessen werden, so dass er gut für eine Reinigung, beispielsweise mit einem Hochdruckreiniger oder einem Dampfreiniger zugänglich und darüber hinaus ebenso wie das Profil einsehbar ist. Auch eine Reinigung mit mechanischen Reinigungsgeräten ist bei einem entsprechend dimensionierten Spalt möglich.

Vorteilhafterweise weist das Profil darüber hinaus wenigstens eine von der Transporteinheit der Verpackungen, d.h. in der oben angegebenen Ausführungsform von der Innenseite des Profils wegverlaufende, nach unten schräge Fläche als Ablaufschräge auf. Durch eine derartige Gestaltung ist gewährleistet, dass ablaufende Reinigungsflüssigkeit oder dergleichen von der Transporteinheit im Innenbereich der Maschine weggeleitet wird.

Wie bereits oben angedeutet wird ein erfindungsgemäßes vorteilhafterweise auf einer Profilieranlage kontinuierlich gefertigt. Eine solche Fertigung kann dabei durch Stanzen, Rollen und Schweißen vorgenommen werden. So kann nach anfänglichem Ausstanzen der Versteifungslaschen das Umbiegen der Versteifungslaschen und des oberen Horizontalschenkels durch Rollen vorgenommen werden. Nach einem anschließenden Verschweißen kann das Profil bei Bedarf in der gleichen Anlage im gleichen Durchgang erneut gerollt werden, um eine gewünschte Form zu erzeugen.

Ein erfindungsgemäßes Profil wird vorteilhafterweise in sogenannten Rollen oder Tiefziehmaschinen, aber auch bei sogenannten Schalenversiegelungsmaschinen (sogenannte Tray Sealer) eingesetzt. Bei derartigen Maschinen wird Packgut, dass häufig aus Lebensmitteln besteht, in vorgeformte Verpackungen eingelegt und versiegelt. Im Falle der Tiefzieh- oder Rollenmaschine werden die Verpackungen unmittelbar in der Maschine durch Tiefziehen aus einer Verpackungsfolie vor der Verpackung des Packguts zusammenhängend hergestellt und nach der Versiegelung geschnitten.

Die Arbeitsstationen einer solchen Maschine sind beispielsweise eine Formstation, eine Versiegelungsstation, eine Schneidstation, usw.

Die Folie wird dabei bei bekannten Maschinen in einer Transporteinrichtung gehalten und in Längsrichtung der Maschine, z.B. durch ein Endloskettenpaar transportiert. Die Kettenführungen sowie die Umlenkrollen können dabei an erfindungsgemäßen Rahmenprofilen befestigt. Auch die genannten Arbeitsstationen werden ganz oder teilweise an einem erfindungsgemäßen Bahnenprofil befestigt. Hieraus ergibt sich die Notwendigkeit einer stabilen Profilausführung.

Ein Ausführungsbeispiel der Erfindung ist in der Zeichnung dargestellt und wir anhand der Figuren nachfolgend näher erläutert.

Im einzelnen zeigen
- Figur 1: eine schematische Seitenansicht einer erfindungsgemäßen Verpackungsmaschine,
- Figur 2: eine Stirnansicht eines erfindungsgemäßen Profils,
- Figur 3: eine Seitenansicht eines erfindungsgemäßen Profils,
- Figur 4: eine perspektivische Darstellung zweier Profilenden zur stirnseitigen Verbindung,
- Figur 5: eine perspektivische Darstellung entsprechend Figur 4 aus anderem Blickwinkel und
- Figur 6: eine Ausschnittvergrößerung aus Figur 5.

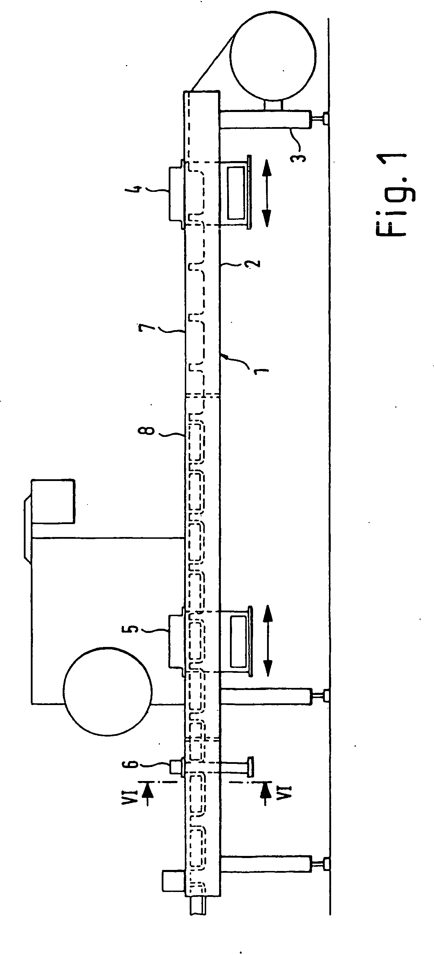

Die Verpackungsmaschine gemäß Figur 1 umfasst einen Rahmen 1, der Seitenwandungen 2, sowie Füße 3 aufweist. Von dem Rahmen 1 werden eine als Formstation ausgebildete erste Arbeitstation 4, eine als Versiegelungsstation ausgebildete zweite Arbeitstation 5 und eine als Schneidstation ausgebildete dritte Arbeitsstation 6 getragen. Die Seitenwandung 2 wird dabei durch erfindungsgemäße Profile 7, 8 gebildet, die stirnseitig auf weiter unten beschriebene Art und Weise verbunden sind.

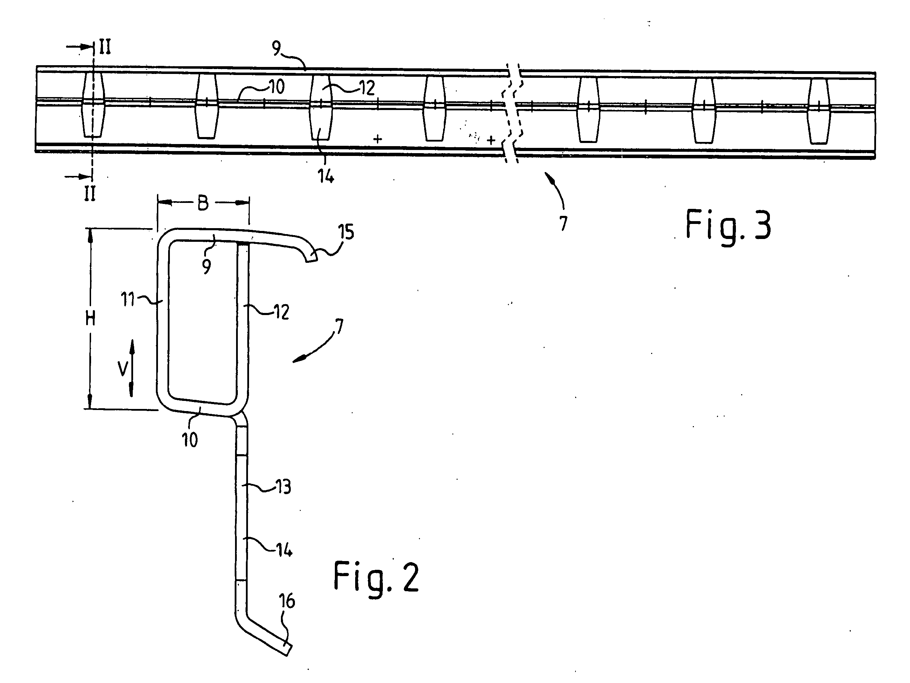

Jedes Profil 7, 8 ist entsprechend dem Profil 7 gemäß Figur 2 geformt. Das Profil 7 weist eine C-Form mit zwei Horizontalschenkeln 9, 10 auf, die über einen Vertikalschenkel 11 miteinander verbunden sind. An voneinander beabstandeten Stellen (siehe Figur 3) sind die beiden Horizontalschenkeln 9, 10 durch Versteifungslaschen 12 versteift.

Unterhalb des unteren Vertikalschenkels 10 ist ein Längssteg 13 angeformt, der das Profil 7 gegen Belastung in vertikaler Richtung V versteift.

Die Versteifungslaschen 12 sind aus dem Längssteg 13 abgetrennt, beispielsweise gestanzt und nach oben zum oberen Horizontalschenkel hingebogen. Hierdurch ergeben sich entsprechende Ausnehmungen 14 im Längssteg 13, die jedoch dessen versteifende Wirkung nicht wesentlich beeinträchtigen.

Durch diese Art der Fertigung der Versteifungslaschen 12 wird kein zusätzliches Material und kein separates Teil erforderlich. Ein derartiges Profil kann aus einem Edelstahlband durch Stanzen, Biegen und Verschweißen hergestellt werden. Das Biegen kann hierbei durch Rollen in einer sogenannten Profilierungsanlage vorgenommen werden.

Wie anhand von Figur 2 ersichtlich ist, ist der obere Horizontalschenkel 9 zur Außenseite des Profils 7 hin verlängert und mit einer nach unten weisenden Ablaufschräge 15 versehen. Auch der Längssteg 13 ist an seinem unteren Ende mit einer entsprechenden Ablaufschräge 16 versehen, die ebenfalls zur Außenseite hin und somit von der Transportvorrichtung der Verpackungsmaschine bzw. den dort transportierten und verarbeiteten Produkten abgewandt ist.

Das Profil 7 ist mit dem Vertikalschenkel 10 der Innenseite, d.h. der Transportvorrichtung der Verpackungsmaschine bzw. den dort transportierten und verarbeiteten Produkten zugewandt, so dass sich dort eine glatte und gut zu reinigende Innenfläche ergibt.

Die Außenseite ist im wesentlichen offen gestaltet, wie anhand von Figur 3 zu erkennen ist. Das Profil 7 ist lediglich im Bereich der Versteifungslaschen 12 geschlossen, und daher von außen her einer Reinigung und einer Sichtkontrolle gut zugänglich. Etwaige Reinigungsflüssigkeit läuft dabei durch die Ablaufschrägen 15,16 zur Außenseite hin ab.

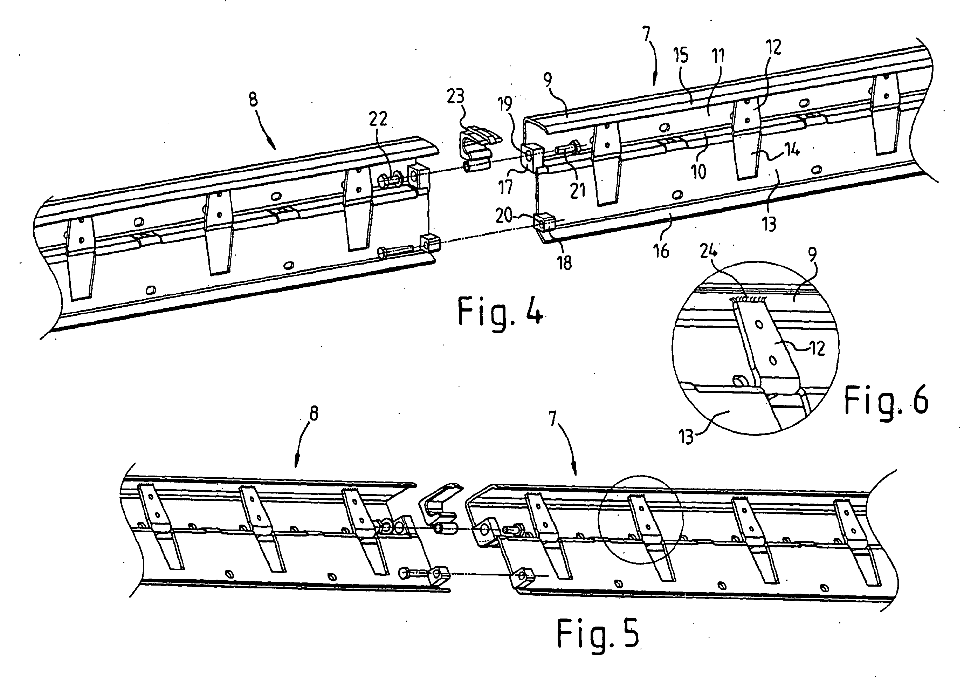

In den Figuren 4 und 5 sind weiterhin Schraubplatten 17, 18 stirnseitig an den Rahmenprofilen 7, 8 angebracht. Die Schraubplatten 17, 18 sind mit Bohrungen 19, 20 versehen, so dass sie über Schrauben 21 und Schraubhülsen 22 stirnseitig verschraubt werden können. Alternativ können in den Schraubplatten 17, 18 je nach Bedarf auch Gewinde eingeschnitten sein. Glatte Bohrungen hingegen verursachen weniger Hygieneprobleme.

Weiterhin ist ein Einlegeteil 23 zum Einlegen zwischen die Profile 7, 8 vorgesehen, um einen Spalt ausreichender Größe zwischen den Stirnseiten 7, 8 zu gewährleisten, so dass auch die Verbindungsstelle einer Reinigung gut zugänglich ist.

Die Ausschnittsvergrößerung gemäß Figur 6 zeigt die Trennung und Umbiegung der Versteifungslasche 12 aus dem Längssteg 13 sowie die Verbindung der Versteifungslasche 12 mit dem oberen Horizontalschenkel 9. In dieser Vergrößerung ist die durchgehende Schweißnaht 24 erkennbar. Durch das Durchschweißen der Schweißnaht 24 werden Ritzen oder Spalte vermieden, die die Hygiene beeinträchtigen könnten.

Neben dem dargestellten Ausführungsbeispiel sind viele weitere Varianten eines Profils in einer erfindungsgemäßen Verpackungsmaschine denkbar. Wesentlich ist der Umstand, dass die Profile 7, 8 an der Außenseite des Rahmens im Wesentlichen offen und daher für eine Reinigung und Sichtkontrolle gut zugänglich geformt sind.

### Bezugszeichenliste:

- 1: Rahmen
- 2: Seitenwandung
- 3: Fuß
- 4: Arbeitstation
- 5: Versiegelungsstation
- 6: Schneidstation
- 7: Profil
- 8: Profil
- 9: Horizontalschenkel
- 10: Horizontalschenkel
- 11: Vertikalschenkel
- 12: Versteifungslasche
- 13: Längssteg
- 14: Ausnehmung
- 15: Ablaufschräge
- 16: Ablaufschräge
- 17: Schraubplatte
- 18: Schraubplatte
- 19: Bohrung
- 20: Bohrung
- 21: Schraube
- 22: Schraubhülse
- 23: Einlegeteil
- 24: Schweißnaht

## Patentansprüche

1. Verpackungsmaschine mit einem Seitenwandungen und diese tragende Füße umfassenden Rahmen und mit wenigstens einer von diesem Rahmen getragenen Arbeitsstation, wobei die Seitenwandungen als Profil ausgebildet sind, **dadurch gekennzeichnet, dass** das Profil (7, 8) seitlich im Wesentlichen offen und nur partiell geschlossen ist.

2. Verpackungsmaschine nach Anspruch 1 **dadurch gekennzeichnet, dass** das Profil (7, 8) mit Versteifungslaschen (12) geschlossen ist.

3. Verpackungsmaschine nach einem der vorgenannten Ansprüche **dadurch gekennzeichnet, dass** das Profil (7, 8) an der Außenseite des Rahmens (1) offen ist.

4. Verpackungsmaschine nach einem der vorgenannten Ansprüche **dadurch gekennzeichnet, dass** die Höhe (H) des Profil größer ist als dessen Breite (B).

5. Verpackungsmaschine nach einem der vorgenannten Ansprüche **dadurch gekennzeichnet, dass** ein in Längsrichtung verlaufender Längssteg (13) vorgesehen ist.

6. Verpackungsmaschine nach einem der vorgenannten Ansprüche **dadurch gekennzeichnet, dass** das Profil (7, 8) mit Längssteg (13) einstückig geformt ist.

7. Verpackungsmaschine nach einem der vorgenannten Ansprüche **dadurch gekennzeichnet, dass** der Längssteg (13) an der Unterseite des Profils (7, 8) geformt ist.

8. Verpackungsmaschine nach einem der vorgenannten Ansprüche **dadurch gekennzeichnet, dass** die Versteifungslaschen aus dem Längssteg (13) herausgetrennt sind.

9. Verpackungsmaschine nach einem der vorgenannten Ansprüche **dadurch gekennzeichnet, dass** die Versteifungslaschen (12) an einem Ende abgebogen und am gegenüberliegenden freien Ende wieder am Profil (7, 8) befestigt sind.

10. Verpackungsmaschine nach einem der vorgenannten Ansprüche **dadurch gekennzeichnet, dass** die Versteifungslaschen (12) an ihrem freien Ende mit dem Profil (7, 8) verschweißt sind.

11. Verpackungsmaschine nach einem der vorgenannten Ansprüche **dadurch gekennzeichnet, dass** die Schweißnähte (24) durchgeschweißt sind.

12. Verpackungsmaschine nach einem der vorgenannten Ansprüche **dadurch gekennzeichnet, dass** der Längssteg (13) höher ist als ein vertikaler Profilschenkel (11) des Profils (7,8).

13. Verpackungsmaschine nach einem der vorgenannten Ansprüche **dadurch gekennzeichnet, dass** das Profil Verbindungselemente im Rastermaß zur Befestigung von Maschinenteilen aufweist.

14. Verpackungsmaschine nach einem der vorgenannten Ansprüche **dadurch gekennzeichnet, dass** im Vertikalschenkel (11) und/oder in den Versteifungslaschen (12) und/oder im Längssteg (13) Löcher als Verbindungselemente vorgesehen sind.

15. Verpackungsmaschine nach einem der vorgenannten Ansprüche **dadurch gekennzeichnet, dass** stirnseitige Verbindungselemente (17, 18) für die stirnseitige Verbindung zweier Profile (7, 8) vorgesehen sind.

16. Verpackungsmaschine nach einem der vorgenannten Ansprüche **dadurch gekennzeichnet, dass** wenigstens ein Einlegeteil (23) als Verbindungselement zur stirnseitigen Verbindung zweier Profile (7, 8) vorgesehen ist.

17. Verpackungsmaschine nach einem der vorgenannten Ansprüche **dadurch gekennzeichnet, dass** die Verbindungselemente in einem offenen Profilbereich beabstandet von der nächsten Versteifungslasche (12) angeordnet ist.

18. Verpackungsmaschine nach einem der vorgenannten Ansprüche **dadurch gekennzeichnet, dass** das Profil (7, 8) wenigstens eine zur Rahmenaußenseite hin verlaufende nach unten schräge Fläche als Ablaufschräge (15, 16) aufweist.

## Claims

1. A packaging machine having a frame comprising side walls and feet which bear the latter, and having at least one workstation borne by this frame, the side walls being in profile form, **characterised in that** the profile (7, 8) is essentially open, and only partially closed, at the sides.

2. The packaging machine as claimed in claim 1, **characterised in that** the profile (7, 8) is closed by stiffening lugs (12).

3. The packaging machine as claimed in one of the preceding claims, **characterised in that** the profile (7, 8) is open on the outside of the frame (1).

4. The packaging machine as claimed in one of the preceding claims, **characterised in that** the height (H) of the profile is greater than the width (B) of the latter.

5. The packaging machine as claimed in one of the preceding claims, **characterised in that** a longitudinal web (13) extending in the longitudinal direction is provided.

6. The packaging machine as claimed in one of the preceding claims, **characterised in that** the profile (7, 8) is formed integrally with the longitudinal web (13).

7. The packaging machine as claimed in one of the preceding claims, **characterised in that** the longitudinal web (13) is formed on the underside of the profile (7, 8).

8. The packaging machine as claimed in one of the preceding claims, **characterised in that** the stiffening lugs are separated out of the longitudinal web (13).

9. The packaging machine as claimed in one of the preceding claims, **characterised in that** the stiffening lugs (12) are bent at one end and are fastened on the profile (7, 8) again at the opposite, free end.

10. The packaging machine as claimed in one of the preceding claims, **characterised in that** the stiffening lugs (12) are welded to the profile (7, 8) at their free end.

11. The packaging machine as claimed in one of the preceding claims, **characterised in that** the weld seams (24) are through-welded.

12. The packaging machine as claimed in one of the preceding claims, **characterised in that** the longitudinal web (13) is higher than a vertical profile leg (11) of the profile (7, 8).

13. The packaging machine as claimed in one of the preceding claims, **characterised in that** the profile has unit-spaced connecting elements for fastening machine parts.

14. The packaging machine as claimed in one of the preceding claims, **characterised in that** holes are provided, as connecting elements, in the vertical leg (11) and/or in the stiffening lugs (12) and/or in the longitudinal web (13).

15. The packaging machine as claimed in one of the preceding claims, **characterised in that** end-side connecting elements (17, 18) are provided for the end-side connection of two profiles (7, 8).

16. The packaging machine as claimed in one of the preceding claims, **characterised in that** at least one insert part (23) is provided as a connecting element for the end-side connection of two profiles (7, 8).

17. The packaging machine as claimed in one of the preceding claims, **characterised in that** the connecting elements in an open profile region are spaced apart from the nearest stiffening lug (12).

18. The packaging machine as claimed in one of the preceding claims, **characterised in that** the profile (7, 8) has at least one downwardly sloping surface, running in the direction of the outside of the frame, as a run-off slope (15, 16).

## Revendications

1. Machine d'emballage avec un châssis entourant des parois latérales et leurs pieds de support, et avec au moins une station de travail supportée par ce châssis, dans laquelle les parois latérales sont constituées sous forme d'un profilé, **caractérisée en ce que** le profilé (7, 8) est latéralement essentiellement ouvert et seulement partiellement fermé.

2. Machine d'emballage selon la revendication 1, **caractérisée en ce que** le profilé (7, 8) est fermé à l'aide d'éclisses (12).

3. Machine d'emballage selon l'une des revendications précédentes, **caractérisée en ce que** le profilé (7, 8) est ouvert sur le côté externe du châssis (1).

4. Machine d'emballage selon l'une des revendications précédentes, **caractérisée en ce que** la hauteur (H) du profilé est supérieure à sa largeur (B).

5. Machine d'emballage selon l'une des revendications précédentes, **caractérisée en ce qu'**une aile longitudinale (13) qui s'étend en direction longitudinale est pourvue.

6. Machine d'emballage selon l'une des revendications précédentes, **caractérisée en ce que** le profilé (7, 8) est formé d'une seule pièce avec l'aile longitudinale (13).

7. Machine d'emballage selon l'une des revendications précédentes, **caractérisée en ce que** l'aile longitudinale (13) est conformée sur le côté inférieur du profilé (7, 8).

8. Machine d'emballage selon l'une des revendications précédentes, **caractérisée en ce que** les éclisses sont séparées de l'aile longitudinale (13).

9. Machine d'emballage selon l'une des revendications précédentes, **caractérisée en ce que** les éclisses (12) sont pliées à une extrémité et fixées au profilé (7, 8) à l'extrémité libre opposée.

10. Machine d'emballage selon l'une des revendications précédentes, **caractérisée en ce que** les éclisses (12) sont soudées au profilé (7, 8) à leur extrémité libre.

11. Machine d'emballage selon l'une des revendications précédentes, **caractérisée en ce que** les cordons de soudure (24) sont réalisés à pleine pénétration.

12. Machine d'emballage selon l'une des revendications précédentes, **caractérisée en ce que** l'aile longitudinale (13) est plus haute qu'une âme de profilé verticale (11) du profilé (7,8).

13. Machine d'emballage selon l'une des revendications précédentes, **caractérisée en ce que** le profilé comporte des éléments de connexion espacés selon un motif de grille pour fixer des éléments de machine.

14. Machine d'emballage selon l'une des revendications précédentes, **caractérisée en ce que** des trous sont pourvus comme éléments de connexion dans l'âme verticale (11) et/ou dans les éclisses (12) et/ou dans l'aile longitudinale (13).

15. Machine d'emballage selon l'une des revendications précédentes, **caractérisée en ce que** des éléments de connexion côté face avant (17, 18) sont pourvus pour la connexion de deux profilés (7, 8) du côté de la face avant.

16. Machine d'emballage selon l'une des revendications précédentes, **caractérisée en ce qu'**au moins un insert (23) est pourvu comme élément de connexion pour la connexion de deux profilés (7, 8) du côté de la face avant.

17. Machine d'emballage selon l'une des revendications précédentes, **caractérisée en ce que** les éléments de connexion sont agencés dans une zone de profilé ouverte avec un espacement par rapport à l'éclisse suivante (12).

18. Machine d'emballage selon l'une des revendications précédentes, **caractérisée en ce que** le profilé (7, 8) comporte au moins une surface inclinée vers le bas en direction de l'extérieur du châssis comme bord d'écoulement (15, 16).
